# EUROPEAN PATENT APPLICATION

(11) **EP 1 770 532 A1**
(43) Date of publication of application: **04.04.2007**
(21) Application number: 05743479.7
(22) Date of filing: 30.05.2005
(51) Int. Cl.: G06F 12/14, G09C 1/00

(54) **INFORMATION ACQUISITION DEVICE, INFORMATION ACQUISITION METHOD, AND INFORMATION ACQUISITION PROGRAM**

(30) Priority: 08.06.2004 JP 2004170399
(71) Applicant: MATSUSHITA ELECTRIC INDUSTRIAL CO., LTD., Osaka 571-8501 (JP)
(72) Inventor: NAKANO, Toshihisa c/o Matsushita El.Ind.Co., Ltd, Chuo-ku, Osaka-shi, Osaka 540-6319 (JP); ISHIHARA, Hideshi c/o Matsushita El.Ind.Co., Ltd, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/009884
(87) International publication number: WO 2005/121980

(57) **Abstract**

Conventionally, before reading content from a recording medium, a drive device and a playback device that plays back content perform device authentication, in order to verify whether the playback device is authorized or not. Once the playback device has been verified as authorized, the playback device is permitted to read any content stored on the recording medium. In view of this, a reading device is provided that limits a type of content acquirable by the playback device by permitting the playback device to read content which satisfies a specific condition and prohibiting the playback device to read other content.

## Description

### Technical Field

The present invention relates to techniques of limiting a type of content acquirable by a device that uses content.

### Background Art

In general, a drive device that reads digital content from a portable medium verifies authenticity of a playback device such as a personal computer at the time of transmission/reception of the content, for protecting the content. One example of such device authentication is a method using identification information unique to the playback device. Patent document 1 discloses a technique of, in a case where device authentication is performed using device identification information, reducing a data size of a TRL (Terminal Revocation List) which is composed of identification information of devices to be invalidated.

Also, non-patent document 1 discloses an authentication technique that applies digital signatures using public keys. Furthermore, public key certificates issued by a trusted certificate authority for ensuring validity of public keys are disclosed too. A device authentication method for verifying authenticity of a playback device using a public key certificate based on these techniques is widely known in the art.
Meanwhile, large-capacity portable recording media such as blu-ray discs are being developed today. This makes it practical to record a large number of sets of content such as movies and music onto a single disc.

Conventional device authentication verifies whether a playback device is authorized or not. This being so, once the playback device has been verified as an authorized device, the playback device is allowed to read any content from a portable recording medium. In a case where a large number of sets of content are recorded on the recording medium as mentioned above, the playback device can even read content that is originally not intended for use by the playback device. For example, a music playback device can read AV content.
Patent document 1: Japanese Patent Application Publication No. 2003-115838.
Patent document 2: Japanese Patent Application Publication No. 2002-281013.
Non-patent document 1: Secure Electronic Commerce: Building the Infrastructure for Digital Signatures and Encryption by Warwick Ford & Michael Baum, Pearson Education Japan.
Non-patent document 2: Gendai Angou Riron (Modern Cryptographic Theory) by Nobuichi Ikeno & Kenji Koyama, Institute of Electronics, Information, and Communication Engineers.

### Disclosure of the Invention

### Problems the Invention is going to Solve

Suppose an unauthorized third party attacks a music playback device and tampers with a program which runs on the music playback device, to unauthorizedly use read content. This being the case, even AV content which originally need not be acquired by the music playback device will end up being submitted to unauthorized use.
In view of this, the present invention aims to provide an information acquisition device, an information acquisition method, an information acquisition program, a recording medium, and an integrated circuit that can limit a type of content readable by a playback device.

### Means of Solving the Problems

The stated aim can be achieved by an information acquisition device for acquiring information from a resource in accordance with an instruction from an information use device, the information acquisition device including: an acquisition unit operable to acquire, from the information use device, permitted group information indicating a group of information which the information use device is permitted to use; a judgment unit operable to acquire, from the resource, use target group information indicating a group of information to which use target information held by the resource belongs, and judge whether the use target information belongs to the group indicated by the permitted group information by comparing the permitted group information and the use target group information; and a control unit operable to acquire the use target information from the resource and output the acquired use target information to the information use device if the judgment unit judges affirmatively, and suppress the output if the judgment unit judges negatively.

The group referred to here is a group of information classified according to a predetermined condition. There are various classification methods. For example, information may be classified depending on a type of the information such as "music", "photographs", "AV content", or "games", depending on a producer/seller of the information, depending on a copyright protection method required in using the information, depending on a security level of the information, depending on a number of replications permitted, or depending on a processing capacity required of a device that processes the information.

### Effects of the Invention

According to this construction, the judgment unit judges whether the use target information belongs to the group indicated by the permitted group information by comparing the use target group information with the permitted group information, and the control unit suppresses the output of the use target information if the use target information is judged as not belonging to the group indicated by the permitted group information. In this way, the information acquisition device of the present invention can limit the information acquirable by the information use device, only to the information which belongs to the group indicated by the permitted group information.

Here, the acquisition unit may acquire, as the permitted group information, first producer identification information showing a producer of the information which the information use device is permitted to use, wherein the judgment unit acquires, as the use target group information, second producer identification information showing a producer of the use target information, compares the first producer identification information and the second producer identification information, and judges affirmatively if the first producer identification information matches the second producer identification information.

According to this construction, the judgment unit judges the use target information as belonging to the group indicated by the permitted group information, when the first producer identification information matches the second producer identification information. In this way, the information acquisition device of the present invention can limit the information acquirable by the information use device, only to the information produced/sold by the producer shown by the first producer identification information.
Here, the acquisition unit may acquire, as the permitted group information, first application identification information showing an application provided in the information use device, wherein the judgment unit acquires, as the use target group information, second application identification information showing an application having a function for correctly processing the use target information, compares the first application identification information and the second application identification information, and judges affirmatively if the first application identification information matches the second application identification information.

According to this construction, the judgment unit judges the use target information as belonging to the group indicated by the permitted group information, when the first application identification information showing the application provided in the information use device matches the second application identification information showing the application having the function for correctly processing the use target information. In this way, the information acquisition device of the present invention can limit the information acquirable by the information use device, only to the information that can be correctly processed by the application provided in the information use device.

Here, the acquisition unit may acquire, as the permitted group information, first method identification information showing a copyright protection method adopted by the information use device, wherein the judgment unit acquires, as the use target group information, second method identification information showing a copyright protection method required in using the use target information, compares the first method identification information and the second method identification information, and judges affirmatively if the first method identification information matches the second method identification information.

According to this construction, the judgment unit judges the use target information as belonging to the group indicated by the permitted group information, when the first method identification information showing the copyright protection method adopted by the information use device matches the second method identification information showing the copyright protection method required in using the use target information. In this way, the information acquisition device of the present invention can limit the information acquirable by the information use device, only to the information which, when used, requires the copyright protection method adopted by the information use device.

Here, the use target information held by the resource may be generated by applying security processing to a digital work, wherein the acquisition unit acquires, as the permitted group information, a first security level showing safety of security processing, and the judgment unit acquires, as the use target group information, a second security level showing safety of the security processing applied to the digital work, compares the first security level and the second security level, and judges affirmatively if the second security level shows higher safety than the first security level.

According to this construction, the judgment unit judges the use target information as belonging to the group indicated by the permitted group information when the safety of the security processing applied to the digital work, which is shown by the second security level, is higher than the safely shown by the first security level. In this way, the information acquisition device of the present invention can limit the information acquirable by the information use device, only to the information to which the security processing with higher safety than the first security level is applied.

Here, a replication method for the use target information may be designated in advance, wherein the acquisition unit acquires, as the permitted group information, first copy control information showing a replication method, and the judgment unit acquires, as the use target group information, second copy control information showing the replication method designated for the use target information, compares the first copy control information and the second copy control information, and judges affirmatively if the first copy control information matches the second copy control information.

The replication method referred to here indicates whether to permit replication and, if permitted, a number of times the replication can be made. According to this construction, the judgment unit judges the use target information as belonging to the group indicated by the permitted group information, when the replication method shown by the first copy control information matches the replication method designated for the use target information. In this way, the information acquisition device of the present invention can limit the information acquirable by the information use device, only to the information that can be replicated according to the replication method shown by the first copy control information.

Here, the acquisition unit may acquire, as the permitted group information, first capacity information showing a processing capacity of the information use device, wherein the judgment unit acquires, as the use target group information, second capacity information showing a processing capacity necessary for processing the use target information, compares the first capacity information and the second capacity information, and judges affirmatively if the processing capacity shown by the first capacity information is no lower than the processing capacity shown by the second capacity information.

According to this construction, the judgment unit judges the use target information as belonging to the group indicated by the permitted group information, when the processing capacity of the information use device is no less than the processing capacity necessary for processing the use target information. Inthisway, the information acquisition device of the present invention can limit the information acquirable by the information use device, only to the information that can be processed within the range of the processing capacity of the information use device.

Here, the information use device may hold a certificate that contains the permitted group information and signature information generated by signing at least the permitted group information, wherein the acquisition unit acquires the permitted group information in a state of being contained in the certificate, the information acquisition device further include: a signature verification unit operable to verify the signature information contained in the certificate, and the judgment unit performs the judgment only if the verification is successful.

According to this construction, the certificate includes the signature information generated by signing at least the permitted group information, and the signature verification unit verifies the signature information prior to the judgment by the judgment unit. Hence the information acquisition device of the present invention can reliably detect whether the permitted group information has been tampered with by an unauthorized third party, prior to the judgment.
Here, the certificate may be issued by a trusted third party organization, with the signature information being generated by signing at least the permitted group information using a secret key held by the third party organization, wherein the signature verification unit verifies the signature information using a public key of the third party organization.

According to this construction, the certificate includes the signature information generated by signing at least the permitted group information using the secret key held by the trusted third party organization. As a result, the information acquisition device of the present invention can receive the permitted group information more securely.
The stated aim can also be achieved by an application programused in an information use device that uses information acquired from a resource via an information acquisition device, the information use device including a storage unit operable to store permitted group information indicating a group of information which the application program is permitted to use, the application program including: an output step of reading the permitted group information corresponding to the application program from the storage unit, and outputting the read permitted group information to the information acquisition device; an acquisition step of acquiring, if the information acquisition device judges that use target information held by the resource belongs to the group indicated by the permitted group information, the use target information via the information acquisition device; and a use step of using the acquired use target information.

According to this construction, the information use device acquires data that belongs to the permitted group information corresponding to the application program, in the acquisition step. This makes it possible to limit the information acquirable by the application program, only to the information that belongs to the group indicated by the permitted group information. If the information use device has a plurality of application programs, the usable information can be limited for each individual application program.

The stated aim can al so be achieved by a computer readable recording medium including: use target information; and use target group information indicating a group of information to which the use target information belongs.
An information acquisition device which reads information from the recording medium having this construction judges, based on the use target group information, whether to output the use target information stored on the recording medium to an external information use device. This enables the information acquirable by the information use device to be limited.

### Brief Description of the Drawings

FIG. 1 shows a structure of a content playback system according to a first embodiment.
FIG. 2 is a block diagram showing structures and data flows of a playback device 100, a reading device 300, and a recording medium 500.
FIG. 3 shows a playback device authentication CRL 510, a manufacturer ID list 520, a reading device authentication CRL 530, a media key list 540, and an encrypted content key 550 stored on the recording medium 500 in detail.
FIG. 4 shows information included in a content file 560 in detail.
FIG. 5 shows structures of a playback device public key certificate 121 and a reading device public key certificate 321.
FIG. 6 shows a title display screen 131 displayed on a monitor 30.
FIG. 7 is a flowchart showing an operation of the content playback system.
FIG. 8 is a flowchart showing the operation of the content playback system, continuing from FIG. 7.
FIG. 9 is a flowchart showing the operation of the content playback system, continuing from FIG. 7.
FIG. 10 is a flowchart showing a SAC establishment process by a shared key generation unit 112 in the playback device 100 and a shared key generation unit 312 in the reading device 300.

### Description of Reference Numerals

- 30: monitor
- 100: playback device
- 101: transmission/reception unit
- 102: control unit
- 103: certificate storage unit
- 106: certificate verification unit
- 112: shared key generation unit
- 113: decryption processing unit
- 114: content decryption unit
- 118: input reception unit
- 119: playback processing unit
- 121: playback device public key certificate
- 300: reading device
- 301: transmission/reception unit
- 302: control unit
- 303: certificate storage unit
- 306: certificate verification unit
- 310: manufacturer ID judgment unit
- 311: category judgment unit
- 312: shared key generation unit
- 313: encryption processing unit
- 316: device key storage unit
- 317: key decryption unit
- 320: drive unit
- 321: reading device public key certificate
- 500: recording medium

### Best Mode for Carrying out the Invention

### 1. First Embodiment

The following describes a content playback system as one embodiment of the present invention.

### 1.1. Overview of the Content Playback System

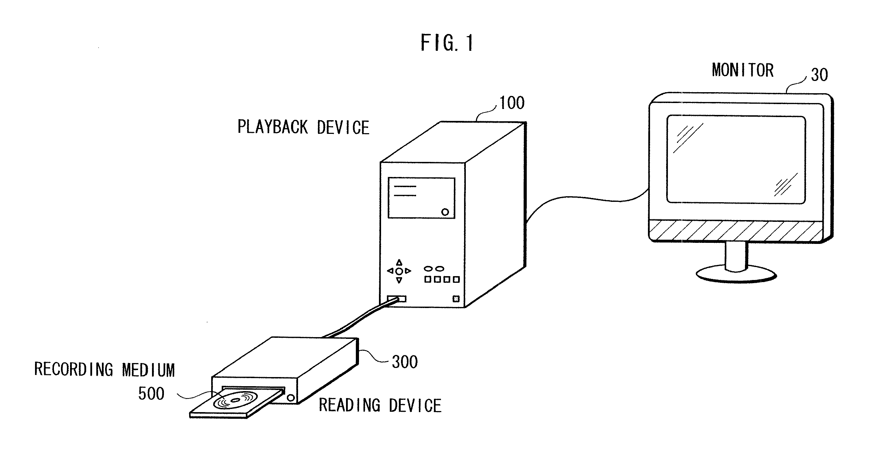

The content playback system is roughly made up of a playback device 100, a reading device 300, and a monitor 30, as shown in FIG. 1. The playback device 100 and the reading device 300 are connected to each other by a cable, and the playback device 100 is connected to the monitor 3 0 that includes a speaker. A recording medium 5 0 0 is inserted into the reading device 300.

The recording medium 500 stores encrypted content generated by encrypting content which is constituted by video, audio, and the like, and a manufacturer ID list that includes a condition for permitting the use of the content.
The reading device 300 and the playback device 100 each hold a public key certificate, and perform mutual authentication using the held public key certificate. In the mutual authentication, the reading device 300 reads the manufacturer ID list from the recording medium 500, and judges whether the playback device 100 satisfies the condition shown by the manufacturer ID list. If the playback device 100 satisfies the condition, the reading device 300 reads the encrypted content from the recording medium 500 and outputs it to the playback device 100. The playback device 100 receives the encrypted content from the reading device 300, decrypts the encrypted content to generate the content, and outputs the generated content to the monitor 30.

### 1.2. Recording Medium 500

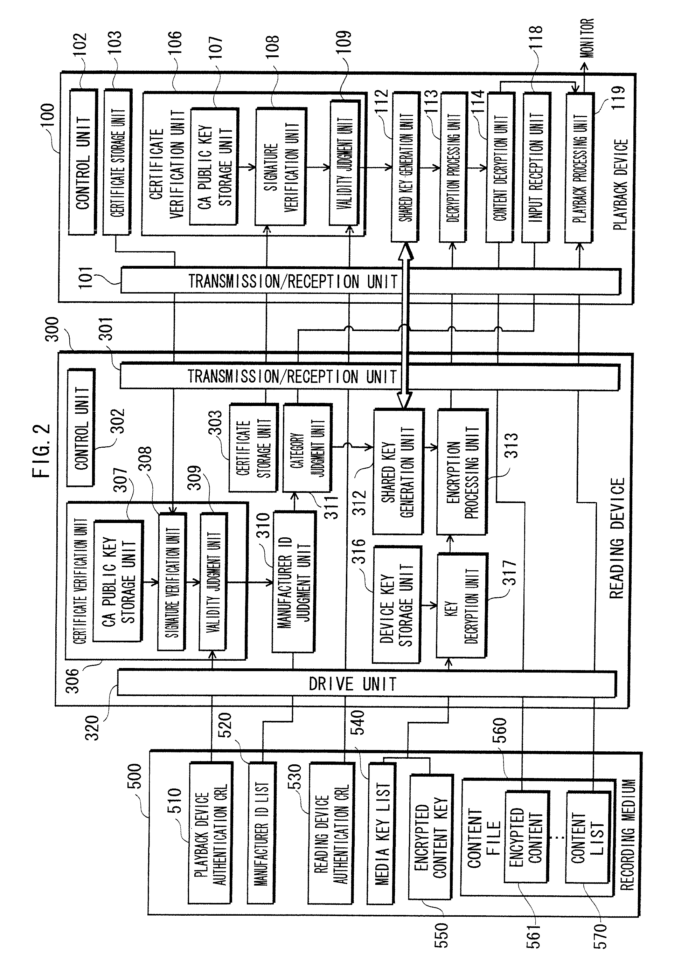

The recording medium 500 is a DVD (Digital Versatile Disk) as one example. As shown in FIG. 2, the recording medium 500 stores a playback device authentication CRL (Cert Revocation List) 510, a manufacturer ID list 520, a reading device authentication CRL 530, a media key list 540, an encrypted content key 550, and a content file 560.

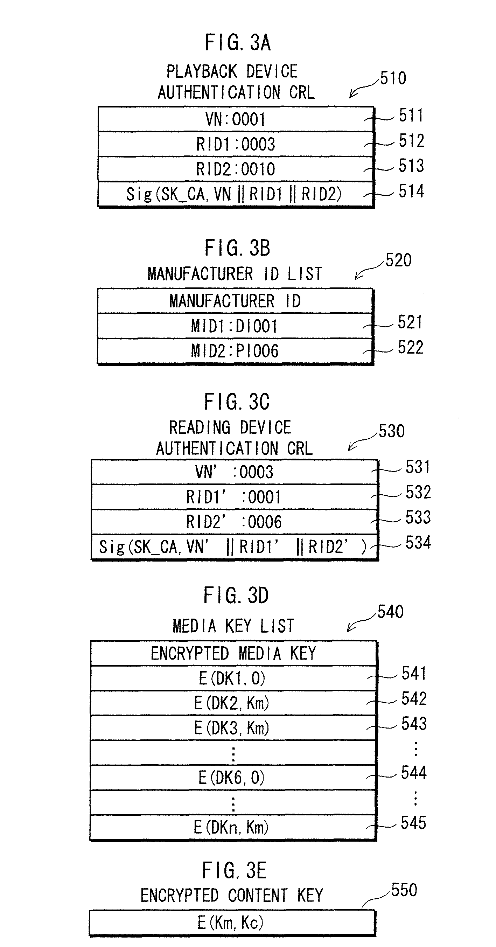

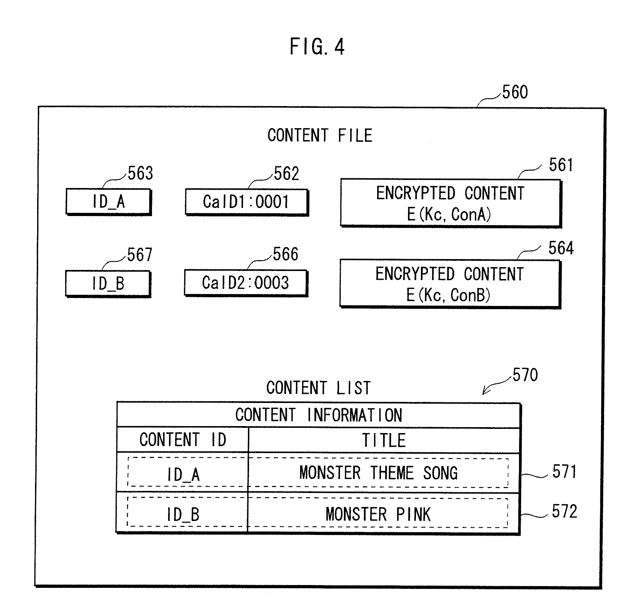

FIGS. 3 and 4 show the above information stored on the recording medium 500 in detail. The information stored on the recording medium 500 is explained below, with reference to FIGS. 3 and 4.
(1) Playback Device Authentication CRL 510
   The playback device authentication CRL 510 is issued by a CA (Certificate Authority). The CA is a trusted third party organization that issues the playback device authentication CRL 510 and the reading device authentication CRL 530 stored on the recording medium 500, and the public key certificates held respectively by the playback device 100 and the reading device 300 (explained in detail later) .

The playback device authentication CRL 510 is made up of a version number 511, certificate IDs 512 and 513, and a CA signature 514, as shown in FIG. 3A. The version number 511 shows a generation of the playback device authentication CRL 510. A larger version number indicates a newer generation.
The certificate ID 512 "RID1" and the certificate ID 513 "RID2" are certificate IDs of revoked public key certificates, among public key certificates of a same structure as a playback device public key certificate 121 (explained in detail later) held by the playback device 100. In the example of FIG. 3A, a public key certificate of a certificate ID "0003" and a public key certificate of a certificate ID "0010" are indicated as revoked.

The CA signature 514 "Sig(SK_CA, VN||RID1||RID2)" is generated by applying signature generation algorithm S to concatenation "VN||RID1||RID2" obtained by concatenating the version number 511, the certificate ID 512, and the certificate ID 513, using a CA secret key "SK_CA" held by the CA. In the following description, "A || B" denotes concatenation of A and B, while "Sig(A, B)" denotes signature data generated by applying a signature generation algorithm to information B using signature key A.

Though a CRL having a simple structure such as the one shown in FIG. 3A is described as an example here, a CRL prescribed by X.509 is also applicable. X.509 is explained in detail in non-patent document 1. Likewise, the reading device authentication CRL 530 shown in FIG. 3C may be in compliance with X.509.
(2) Manufacturer ID List 520
   The manufacture ID list 520 is made up of manufacturer IDs 521 and 522, as shown in FIG. 3B. A manufacturer ID is identification information showing an entity that possesses some kinds of rights relating to the recording medium 500, such as a manufacturer/seller of the recording medium 500, a producer of original content corresponding to the encrypted content recorded on the recording medium 500, or a company that conducts business with these companies (hereafter they are collectively referred to as a manufacturer/seller or a producer).

The manufacturer ID list shows the condition for permitting the use of the encrypted content, and indicates that a device having a public key certificate which includes at least one of the manufacturer ID 521 "MID1" and the manufacturer ID 522 "MID2" is permitted to use the encrypted content. In the example of FIG. 3B, a device having a public key certificate which includes a manufacturer ID "DI001" or a manufacturer ID "PI006" is indicated as being permitted to use the encrypted content.

(3) Reading Device Authentication CRL 530
   The reading device authentication CRL 530 is issued by the CA, and made up of a version number 531, certificate IDs 532 and 533, and a CA signature 534 as shown in FIG. 3C. The version number 531 shows a generation of the reading device authentication CRL 530. A larger version number indicates a newer generation.

The certificate ID 532 "RID1' " and the certificate ID 533 "RID2' " are certificate IDs of revoked public key certificates, among public key certificates of a same structure as a reading device public key certificate 321 (explained in detail later) held by the reading device 300. In the example of FIG. 3C, the reading device authentication CRL 530 indicates that public key certificates having certificate IDs "0001" and "0006" are revoked.

The CA signature 534 "Sig (SK_CA, VN' || RID1' ||RID2') is generated by encrypting concatenation "VN'||RID1'||RID2'" obtained by concatenating the version number 531, the certificate ID 532, and the certificate ID 533, using the CA secret key "SK_CA".
(4) Media Key List 540
   The media key list 540 is made up of n encrypted media keys 541, 542, 543, ... (n being a natural number), as shown in FIG. 3D. Each encrypted media key corresponds to a device capable of reading information stored on the recording medium 500. Each encrypted media key is generated by applying encryption algorithm E1 to a media key "Km" using a device key "DKt" of a corresponding device (t being a natural number no larger than n) . The device key "DKt" is key information unique to a device capable of reading information stored on the recording medium 500 . The media key "Km" is an encryption key used for generating the encrypted content key 550.

Note here that an encrypted media key corresponding to an invalidated device is a result of encrypting dummy data "0" instead of the media key. In the example of FIG. 3D, a device having a device key "DK1" and a device having a device key "DK6" are invalid, so that these devices cannot generate the media key from the encrypted media key.
In this specification, "E(A, B)" denotes ciphertext generated by encrypting plaintext B using encryption key A.

Though a media key list having a simplest structure is described here, a method of providing the media key only to valid devices is not limited to this. For example, a method of managing keys by using a tree structure is disclosed in patent document 2.
Encryption algorithm E1 used here is DES (DataEncryption Standard) as one example, though other encryption algorithms are applicable too.

(5) Encrypted Content Key 550
   The encrypted content key 550 "E (Km, Kc) " shown in FIG. 3E is generated by applying encryption algorithm E1 to a content key "Kc" using the media key "Km". The content key "Kc" is an encryption key used for generating encrypted content 561 and encrypted content 564 included in the content file 560.

(6) Content File 560
   The content file 560 includes content IDs 563 and 567, category IDs 562 and 566, the encrypted content 561 and the encrypted content 564, and a content list 570, as shown in FIG. 4. The content ID 563, the category ID 562, and the encrypted content 561 are stored in correspondence with each other, and the content ID 567, the category ID 566, and the encrypted content 564 are stored in correspondence with each other.

A content ID is identification information for identifying content generated by decrypting corresponding encrypted content.
A category ID is identification information for identifying a type of content generated by decrypting corresponding encrypted content. For example, a category ID "0001" indicates music, a category ID "0002" indicates photographs, a category ID "0003" indicates AV content, and a category ID "0004" indicates games.

Encrypted content is generated by applying encryption algorithm E2 to content which is constituted by video, audio, and the like, using the content key.
In detail, the encrypted content 561 "E (Kc, ConA) " is generated by encrypting content "ConA" using the content key "Kc". The content ID 563 "ID_A" is identification information unique to the content "ConA". The category ID 562 "CaID1" is identification information showing a type of the content "ConA". In the example of FIG. 4, the category ID 562 "CaID1" is "0001" indicating music.

The encrypted content 564 "E(Kc, ConB)" is generated by applying encryption algorithm E2 to content "ConB" using the content key "Kc". The content ID 567 "ID_B" is identification information unique to the content "ConB". The category ID 566 "CaID2" is identification information showing a type of the content "ConB" . In the example of FIG. 4, the category ID 566 "CaID2" is "0003" indicating AV content.

Encryption algorithm E2 is DES or AES (Advanced Encryption Standard) as one example.
The content list 570 is composed of content information 571 and content information 572. The content information 571 and the content information 572 respectively correspond to the encrypted content 561 and the encrypted content 564.
Each piece of content information is made up of a content ID and a title. The content ID is identification information for identifying content generated by decrypting corresponding encrypted content. The title is a name of the content identified by the corresponding content ID.

For example, the content ID "ID_A" included in the content information 571 is the same as the content ID 563 corresponding to the encrypted content 561, and the title "Monster theme song" is a name of the content "ConA" which is generated by decrypting the encrypted content 561.

### 1.4. Playback Device 100

The playback device 100 is connected to the monitor 30 including the speaker, as shown in FIG. 1. The playback device 100 reads encrypted content stored on the recording medium 500 via the reading device 300, decrypts the read encrypted content, and outputs the decrypted content to the monitor 30 to play back the content.

As shown in FIG. 2, the playback device 100 includes a transmission/reception unit 101, a control unit 102, a certificate storage unit 103, a certificate verification unit 106, a shared key generation unit 112, a decryption processing unit 113, a content decryption unit 114, an input reception unit 118, and a playback processing unit 119.
(1) Certificate Storage Unit 103
   The certificate storage unit 103 is constituted by a ROM (Read Only Memory), and stores the playback device public key certificate 121 that is unique to the playback device 100.

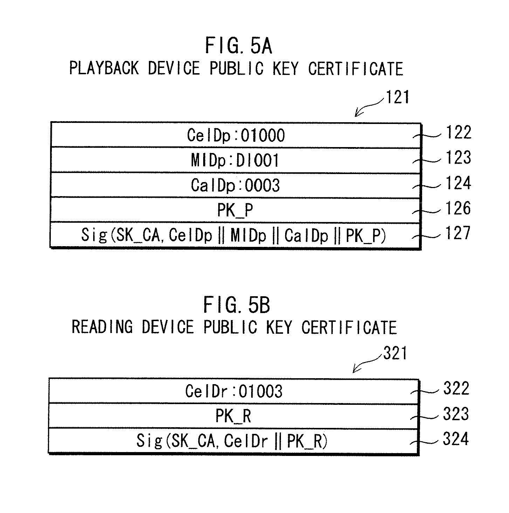

FIG. 5A shows the playback device public key certificate 121 stored in the certificate storage unit 103, in detail. The playback device public key certificate 121 is issued by the CA, and includes a certificate ID 122, a manufacturer ID 123, a category ID 124, a public key 126, and a CA signature 127.
The certificate ID 122 is identification information unique to the playback device public key certificate 121. The manufacturer ID 123 is identification information showing a manufacturer/seller of content which the playback device 100 is permitted to use. In this example, the manufacturer ID 123 "MIDp" is the same as the manufacturer ID 521 included in the manufacturer ID list 520 stored on the recording medium 500.

The category ID 124 shows a type of content which the playback device 100 is permitted to use. In this example, the category ID 124 "CaIDp" is "0003" indicating AV content. Which is to say, the playback device public key certificate 121 indicates that the playback device 100 is permitted to use AV content out of content produced/sold by a manufacturer/seller shown by the manufacturer ID 123 "MIDp" .

The public key 126 "PK_P" is a public key that is verified as valid by this playback device public key certificate, and corresponds to a secret key "SK_P" held in the shared key generation unit 112.
The CA signature 127 "Sig(SK_CA, CeIDp||MIDp||CaIDp||PK_P)" is generated by applying signature generation algorithm S to concatenation "CeIDp||MIDp||CaIDp||PK_P" obtained by concatenating the certificate ID 122, the manufacturer ID 123, the category ID 124, and the public key 126, using the CA secret key "SK_CA".

Though a public key certificate having a simple structure is described here for the sake of simplicity, a public key certificate prescribed by X.509 may instead be used. X.509 is explained in detail in non-patent document 1.
(2) Transmission/reception Unit 101
   The transmission/reception unit 101 outputs information received from each unit of the playback device 100 to an external device. The transmission/reception unit 101 also acquires information from the external device, and outputs the acquired information to each unit of the playback device 100 or notifies each unit of the acquisition of the information. The external device mentioned here is the reading device 300.

For instance, the transmission/reception unit 101 acquires the reading device public key certificate, the reading device authentication CRL, the content list, and the like from the reading device 300.
Having acquired the reading device public key certificate and the reading device authentication CRL, the transmission/reception unit 101 outputs the acquired reading device public key certificate to the certificate verification unit 106, and notifies the control unit 102 of the acquisition of the reading device public key certificate. Having acquired the content list, the transmission/reception unit 101 outputs the acquired content list to the playback processing unit 119.

(3) Certificate Verification Unit 106
   The certificate verification unit 106 includes a CA public key storage unit 107, a signature verification unit 108, and a validity judgment unit 109, as shown in FIG. 2.
   The CA public key storage unit 107 is constituted by a ROM, and stores a CA public key "PK_CA". The CA public key "PK_CA" is key information corresponding to the CA secret key "SK_CA".

The signature verification unit 108 receives the reading device public key certificate having the structure shown in FIG. 5B (explained in detail later) from the reading device 300 via the transmission/reception unit 101, and receives an instruction to verify the reading device public key certificate from the control unit 102. Upon receipt of the verification instruction, the signature verification unit 108 reads the CA public key "PK_CA" from the CA public key storage unit 107, and applies signature verification algorithm V to a CA signature "Sig(SK_CA, CeIDr||PK_R)" included in the received reading device public key certificate using the read CA public key "PK_CA" , to verify the CA signature . If the verification results in a failure, the signature verification unit 108 outputs a control signal indicating a failure of the verification of the reading device public key certificate to the control unit 102, to prohibit subsequent information transmission/reception with the reading device 300.

If the verification of the CA signature results in a success, the signature verification unit 108 outputs the received reading device public key certificate and the read CA public key "PK_CA" to the validity judgment unit 109.
The validity judgment unit 109 receives the reading device public key certificate and the CA public key "PK_CA" from the signature verification unit 108. The validity judgment unit 109 also receives the reading device authentication CRL form the reading device 300 via the transmission/reception unit 101.

Having received these information, the validity judgment unit 109 applies the signature verification algorithm V to the CA signature "Sig(SK_CA, VN' || RID1' || RID2') " included in the received reading device authentication CRL using the received CA public key "PK_CA" , to verify the CA signature. If the verification results in a failure, the validity judgment unit 109 outputs a control signal indicating a failure of the verification of the reading device public key certificate to the control unit 102, to prohibit subsequent information transmission/reception with the reading device 300.

If the verification of the CA signature "Sig(SK_CA, VN'||RID1'||RID2')" results in a success, the validity judgment unit 109 extracts a certificate ID "CeIDr" from the received reading device public key certificate, and checks whether the extracted certificate ID "CeIDr" is registered in the received reading device authentication CRL.
If the extracted certificate ID "CeIDr" is registered in the reading device authentication CRL, the validity judgment unit 109 outputs a control signal indicating a failure of the verification of the reading device public key certificate to the control unit 102, to prohibit subsequent information transmission/reception with the reading device 300.

If the extracted certificate ID "CeIDr" is not registered in the reading device authentication CRL, the validity judgment unit 109 outputs the received reading device public key certificate to the shared key generation unit 112.
(4) Shared Key Generation Unit 112
   The shared key generation unit 112 holds the secret key "SK_P" paired with the public key 126 "PK_P" included in the playback device public key certificate 121, in advance.

When requested to start SAC establishment via the transmission/reception unit 101, the shared key generation unit 112 establishes a SAC with the shared key generation unit 312 in the reading device 300, and generates a shared key "Key_s". The SAC establishment between the shared key generation unit 112 and the shared key generation unit 312 will be explained later with reference to a drawing.
Once the SAC has been successfully established, the shared key generation unit 112 outputs the generated shared key "Key_s" to the decryption processing unit 113. If the SAC establishment results in a failure, on the other hand, the shared key generation unit 112 outputs a control signal indicating a SAC establishment failure to the control unit 102.

(5) Decryption Processing Unit 113
   The decryption processing unit 113 receives the shared key "Key_s" from the shared key generation unit 112. The decryption processing unit 113 also receives an encrypted content key "E (Key_s', Kc)" from the reading device 3 0 0 via the transmission/reception unit 101. Having received the encrypted content key "E(Key_s', Kc)", the decryption processing unit 113 applies decryption algorithm D3 to the encrypted content key "E(Key_s', Kc)" using the received shared key "Key_s", to generate the content key "Kc". The decryption processing unit 113 outputs the generated content key "Kc" to the content decryption unit 114.

Decryption algorithm D3 used here is an algorithm for decrypting ciphertext generated by encryption algorithm E3.
(6) Content Decryption Unit 114
   The content decryption unit 114 receives the content key "Kc" from the decryption processing unit 113. The content decryption unit 114 also receives encrypted content from the reading device 300 via the transmission/reception unit 101. Having received the encrypted content, the content decryption unit 114 applies decryption algorithm D3 to the encrypted content using the received content key "Kc", to generate content. The content decryption unit 114 outputs the generated content to the playback processing unit 119.

(7) Playback Processing Unit 119
   The playback processing unit 119 is constituted by a RAM, a ROM, and the like. An application including a procedure for playing back moving images is stored in the RAM and the ROM. The playback processing unit 119 has a function of playing back moving images constituted by video and audio, by operating in accordance with this application.

The playback processing unit 119 stores various types of screen data such as title display screen data for displaying a title of content stored on the recording medium 500.
The playback processing unit 119 receives the content list from the reading device 300 via the transmission/reception unit 101. Also, the playback processing unit 119 receives an instruction to display a disc error screen for notifying the user that the inserted recording medium cannot be used, and a content ID and an instruction to display a content error screen for notifying the user that content designated by the content ID cannot be read. Furthermore, the playback processing unit 119 receives content from the content decryption unit 114.

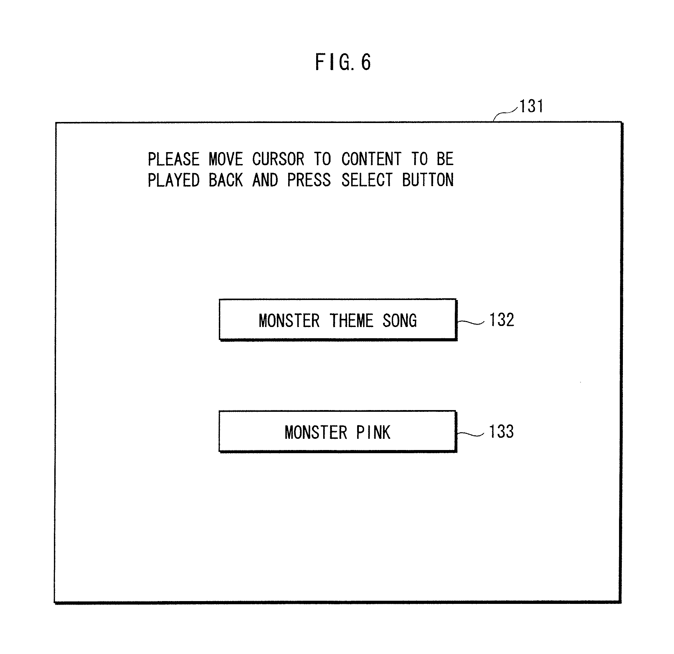

Upon receiving the disc error screen display instruction, the playback processing unit 119 generates the disc error screen including a character string such as "this disc cannot be played back" based on the stored screen data, and outputs the generated disc error screen to the monitor 30.
Upon receiving the content list, the playback processing unit 119 temporarily stores the received content list. The playback processing unit 119 then generates a title display screen based on the titles included in the content list and the title display screen data, and outputs the generated title display screen to the monitor 30. FIG. 6 shows an example title display screen 131 displayed on the monitor 30. The title display screen 131 includes selection buttons 132 and 133 which correspond to the content information included in the content list. The titles shown in the content list are written on the selection buttons 132 and 133.

Upon receiving the content ID and the content error screen display instruction, the playback processing unit 119 extracts a title corresponding to the received content ID from the stored content list. The playback processing unit 119 generates the content error screen including a character string such as "the monster theme song cannot be played back" based on the extracted title and the stored screen data, and outputs the generated content error screen to the monitor 30.

Upon receiving the content, the playback processing unit 119 generates audio data and a screen from the received content, and outputs them to the monitor 30.
(8) Input Reception Unit 118
   The input reception unit 118 includes a plurality of buttons such as a direction button and an enter button, and receives a button operation from the user. For example, in a state where the title display screen 131 is displayed on the monitor 30, the user operates these buttons in the input reception unit 118 and selects one of the selection buttons 132 and 133. The input reception unit 118 extracts a content ID from content information corresponding to the selected selection button, and outputs the extracted content ID to the reading device 300 via the transmission/reception unit 101.

(9) Control Unit 102
   The control unit 102 controls the operations of each unit of the playback device 100. In detail, the control unit 102 receives a control signal indicating the acquisition of the reading device public key certificate via the transmission/reception unit 102, and instructs the certificate verification unit 106 to verify the reading device public key certificate.
   Also, the control unit 102 receives a control signal indicating whether the verification of the reading device public key certificate is successful or not, from the certificate verification unit 106. Upon receipt of a control signal indicating a success of the verification of the reading device public key certificate, the control unit 102 transmits the playback device public key certificate stored in the certificate storage unit 103 to the reading device 300 via the transmission/reception unit 101. Upon receipt of a control signal indicating a failure of the verification of the reading device public key certificate, on the other hand, the control unit 102 prohibits subsequent communications with the reading device 300.

Also, the control unit 102 receives an prohibition notification indicating that the use of the recording medium 500 is not permitted, from the reading device 300 via the transmission/reception unit 101. Also, the control unit 102 receives a control signal indicating a SAC establishment failure from the shared key generation unit 112.
Upon receipt of the prohibition notification or the control signal indicating a SAC establishment failure, the control unit 102 instructs the playback processing unit 119 to display the disc error screen for notifying the user that the inserted recording medium 500 cannot be used.

Also, the control unit 102 receives a content ID and a read prohibition notification indicating that the reading of content designated by the content ID is not permitted, via the transmission/reception unit 101. Upon receipt of them, the control unit 102 outputs the received content ID to the playback processing unit 119, and instructs the playback processing unit 119 to display the content error screen for notifying the user that the designated content cannot be read.

### 1.3. Reading Device 300

As shown in FIG. 2, the reading device 300 includes a transmission/reception unit 301, a control unit 302, a certificate storage unit 303, a certificate verification unit 306, a manufacturer ID judgment unit 310, a category judgment unit 311, a shared key generation unit 312, an encryption processing unit 313, a device key storage unit 316, a key decryption unit 317, and a drive unit 320.

(1) Certificate Storage Unit 303 and Device Key Storage Unit 316
   The certificate storage unit 303 and the device key storage unit 316 are constituted by a ROM.
   The certificate storage unit 303 stores the reading device public key certificate 321 shown in FIG. 5B. The reading device public key certificate 321 is issued by the CA, and includes a certificate ID 322, a public key 323, and a CA signature 324.

The certificate ID 322 is identification information unique to the reading device public key certificate 321. The public key 323 "PK_R" is a public key of the reading device 300 that is verified as valid by the reading device public key certificate, and is key information paired with a secret key "SK_R" of the reading device 300 stored in the shared key generation unit 312.
The signature information 324 is generated by applying signature generation algorithm S to concatenation "CeIDr||PK_R" obtained by concatenating the certificate ID 322 and the public key 323, using the CA secret key "SK_CA".

The device key storage unit 316 stores a device key "DKk" unique to the reading device 300 (k being a natural number no larger than n) . The device key "DKk" corresponds to one of the encrypted media keys included in the media key list 540.
(2) Transmission/reception Unit 301
   The transmission/reception unit 301 outputs information received from each unit of the reading device 300 to an external device. Also, the transmission/reception unit 301 acquires information from the external device, and outputs the acquired information to each unit of the reading device 300 or notifies each unit of the acquisition of the information. The external device mentioned here is the playback device 100.

For example, the transmission/reception unit 301 acquires the playback device public key certificate, a content ID, and the like from the playback device 100 . Upon acquiring the playback device public key certificate, the transmission/reception unit 301 outputs the acquiredplayback device public key certificate to the certificate verification unit 306, and also notifies the control unit 302 of the acquisition of the playback device public key certificate. Upon acquiring the content ID, the transmission/reception unit 301 outputs the acquired content ID to the category judgment unit 311.

(3) Drive Unit 320
   The drive unit 320 can be loaded with the recording medium 500, and reads various information from the recording medium 500 and outputs the read information to each unit of the reading device.
(4) Certificate Verification Unit 306
   The certificate verification unit 306 includes a CA public key storage unit 307, a signature verification unit 308, and a validity judgment unit 309.

The CA public key storage unit 307 stores the CA public "PK_CA" that is paired with the CA secret key "SK_CA".
The signature verification unit 308 receives the playback device public key certificate 121 having the structure shown in FIG. 5A from the playback device 100 via the transmission/reception unit 301, and receives an instruction to verify the playback device public key certificate from the control unit 302.

Upon acquiring the playback device public key certificate and the verification instruction, the signature verification unit 308 reads the CA public key "PK_CA" from the CA public key storage unit 307, and applies signature verification algorithm V to the CA signature "Sig(SK_CA, CeIDp||MIDp||CaIDp||PK_P)" included in the acquiredplayback device public key certificate using the read CA public key "PK_CA", to verify the CA signature. If the verification of the CA signature "Sig(SK_CA, CeIDp||MIDp||CaIDp||PK_P)" results in a failure, the signature verification unit 308 outputs a control signal indicating a failure of the verification of the playback device public key certificate to the control unit 302, to prohibit subsequent information transmission/reception with the playback device 100.

If the verification of the CA signature "Sig(SK_CA, CeIDp ||MIDp||CaIDp||PK_P)" results in a success, the signature verification unit 308 outputs the acquired playback devicepublic key certificate and the read CApublic key "PK_CA" to the validity judgment unit 309.
The validity judgment unit 309 receives the playback device public key certificate and the CA public key "PK_CA" from the signature verification unit 308. Having received the playback device public key certificate and the CA public key "PK_CA" , the validity judgment unit 309 reads the playback device authentication CRL 510 from the recording medium 500 via the drive unit 320. The validity judgment unit 309 applies the signature verification algorithm V to the CA signature 514 included in the read playback device authentication CRL 510 using the received CA public key "PK_CA" , to verify the CA signature 514. If the verification of the CA signature 514 results in a failure, the validity judgment unit 3 09 outputs a control signal indicating a failure of the verification of the playback device public key certificate to the control unit 302, to prohibit subsequent information transmission/reception with the playback device 100.

If the verification of the CA signature 514 results in a success, the validity judgment unit 309 extracts the certificate ID "CeIDp" from the received playback device public key certificate, and checks whether the extracted certificate ID "CeIDp" is registered in the read playback device authentication CRL 510. If the extracted certificate ID "CeIDp" is registered in the playback device authentication CRL 510, the validity judgment unit 309 outputs a control signal indicating a failure of the verification of the playback device public key certificate to the control unit 302, to prohibit subsequent information transmission/reception with the playback device 100.

If the extractedcertificate ID "CeIDp" is not registered in the playback device authentication CRL 510, the validity judgment unit 309 outputs the received playback device public key certificate to the manufacturer ID judgment unit 310. (5) Manufacturer ID Judgment Unit 310
The manufacturer ID judgment unit 310 receives the playback device public key certificate from the certificate verification unit 306. Having received the playback device public key certificate, the manufacturer ID judgment unit 310 reads the manufacturer ID list 520 from the recording medium 500, and checks whether the manufacturer ID "MIDp" included in the received playback device public key certificate is registered in the read manufacturer ID list 520.

If the manufacturer ID "MIDp" is not registered in the manufacturer ID list 520, the manufacturer ID judgment unit 310 outputs a use prohibition notification indicating that the playback device 100 which holds the received playback device public key certificate is not permitted to use encrypted content recorded on the recording medium 500, to the control unit 302.
If the manufacturer ID "MIDp" is registered in the manufacturer ID list 520, the manufacturer ID judgment unit 310 outputs a use permission notification indicating that the playback device 100 is permitted to use encrypted content recorded on the recording medium 500, to the control unit 302. The manufacturer ID judgment unit 310 then outputs the received playback device public key certificate to the category judgment unit 311.

(6) Category Judgment Unit 311
   The category judgment unit 311 receives the playback device public key certificate from the manufacturer ID judgment unit 310. The category judgment unit 311 also receives a content ID from the playback device 100 via the transmission/reception unit 301.
   Having received the content ID, the category judgment unit 311 reads a category ID corresponding to the received content ID from the content file 560 via the drive unit 320, and compares the read category ID with the category ID "CaIDp" included in the playback device public key certificate.

If the two category IDs do not match, the category judgment unit 311 outputs the received content ID and a read prohibition notification indicating that the playback device 100 is not permitted to read content identified by the received content ID, to the control unit 302.
If the two category IDs match, the category judgment unit 311 outputs the received content ID and a read permission notification indicating that the playback device 100 is permitted to read the encrypted content corresponding to the received content ID, to the control unit 302. The category judgment unit 311 then outputs the received playback device public key certificate to the shared key generation unit 312.

(8) Shared Key Generation Unit 312
   The shared key generation unit 312 holds the secret key "SK_R" corresponding to the public key 323 "PK_R" included in the reading device public key certificate.
   The shared key generation unit 312 receives the playback device public key certificate from the category judgment unit 311.

The shared key generation unit 312 receives an instruction to establish a SAC (Secure Authentication Channel) from the control unit 302. Upon receiving the SAC establishment instruction, the shared key generation unit 312 outputs a SAC establishment start request to the shared key generation unit 112 in the playback device 100. The shared key generation unit 312 then establishes a SAC with the shared key generation unit 112, and generates a shared key "Key_s' " . The SAC establishment between the shared key generation unit 312 and the shared key generation unit 112 will be explained in detail later.

If the SAC establishment results in a failure, the shared key generation unit 312 outputs a control signal indicating a SAC establishment failure to the control unit 302.
If the SAC establishment results in a success, the shared key generation unit 312 outputs a control signal indicating a SAC establishment success to the control unit 3 02 , and outputs the generated shared key "Key_s'" to the encryptionprocessing unit 313.

(9) Key Decryption Unit 317
   The key decryption unit 317 receives a key decryption instruction to decrypt an encrypted content key from the control unit 302. Upon receiving the key decryption instruction, the key decryption unit 317 reads the device key "DKk" from the device key storage unit 316. The key decryption unit 316 then reads the media key list 540 and the encrypted content key 550 form the recording medium 500 via the drive unit 320.

The key decryption unit 316 extracts the encrypted media key corresponding to the device key "DKk" from the read media key list 540, and applies decryption algorithm D1 to the extracted encrypted media key using the device key "DKk" to generate the media key "Km".
Next, the key decryption unit 317 applies decryption algorithm D1 to the read encrypted content key 550 using the generated media key "Km", to generate the content key "Kc". The key decryption unit 317 outputs the generated content key "Kc" to the encryption processing unit 313.

Decryption algorithm D1 used here is an algorithm for decrypting ciphertext generated by encryption algorithm E1.
(8) Encryption Processing Unit 313
   The encryption processing unit 313 receives the shared key "Key_s"' from the shared key generation unit 312, and the content key "Kc" from the key decryption unit 317. Having received the shared key "Key_s'" and the content key "Kc", the encryption processing unit 313 applies encryption algorithm E3 to the content key "Kc" using the received shared key "Key_s'", to generate the encrypted content key "E (Key_s' , Kc)". The encryption processing unit 313 outputs the generated encrypted content key "E(Key_s', Kc)" to the playback device 100 via the transmission/reception unit 301.

Encryption algorithm E3 used here employs a symmetric-key cryptography such as DES or AES.
(10) Control Unit 302
   The control unit 302 receives a control signal from each unit of the reading device 300, and controls the operations of each unit.

In detail, the control unit 302 detects the insertion of the recording medium 500 via the drive unit 320. The control unit 302 also detects the reception of the playback device public key certificate from the playback device 100 via the transmission/reception unit 301.
The control unit 302 receives the use permission notification or the use prohibition notification from the manufacturer ID judgment unit 310. The control unit 302 also receives the read prohibition notification and the content ID, or the read permission notification and the title from the category judgment unit 311.

Upon detecting the insertion of the recording medium 500, the control unit 302 reads the reading device public key certificate 321 from the certificate storage unit 303, and reads the reading device authentication CRL 530 from the recording medium 500 via the drive unit 320. The control unit 302 outputs the reading device public key certificate 321 and the reading device authentication CRL 530 to the playback device 100 via the transmission/reception unit 301.
Upon detecting the reception of the playback device public key certificate, the control unit 302 outputs an instruction to verify the playback device public key certificate to the certificate verification unit 306. If the control unit 3 02 receives a control signal indicating a failure of the verification of the playback device public key certificate from the certificate verification unit 306, the control unit 302 prohibits subsequent information transmission/reception with the playback device 100.

Upon receiving the use permission notification from the manufacturer ID judgment unit 310, the control unit 302 reads the content list 570 included in the content file 560 stored on the recording medium 500 via the drive unit 320, and outputs the read content list 570 to the playback device 100 via the transmission/reception unit 301. Upon receiving the use prohibition notification, on the other hand, the control unit 302 outputs a prohibition notification indicating that the playback device 100 is not permitted to use the recording medium 500 to the playback device 100 via the transmission/reception unit 301, without performing the reading and output of the content list.

When receiving the content ID and the read prohibition notification from the category judgment unit 311, the control unit 3 02 outputs the received content ID and a read prohibition notification indicating that the playback device 100 is not permitted to read the designated content, to the playback device 100 via the transmission/reception unit 301.
When receiving the read permission notification and the content ID from the category judgment unit 311, the control unit 302 instructs the shared key generation unit 312 to establish a SAC. The control unit 302 then receives a control signal indicating a SAC establishment success or a control signal indicating a SAC establishment failure from the shared key generation unit 312.

Upon receiving the control signal indicating the SAC establishment failure, the control unit 302 cancels an encrypted content reading operation described below.
Upon receiving the control signal indicating the SAC establishment success, the control unit 302 reads encrypted content corresponding to the content ID received from the category judgment unit 311, from the recording medium 500 via the drive unit 320. The control unit 302 outputs the read encrypted content to the playback device 100 via the transmission/reception unit 301. The control unit 302 also outputs a key decryption instruction to decrypt an encrypted content key, to the key decryption unit 317.

### 1.5. Operation

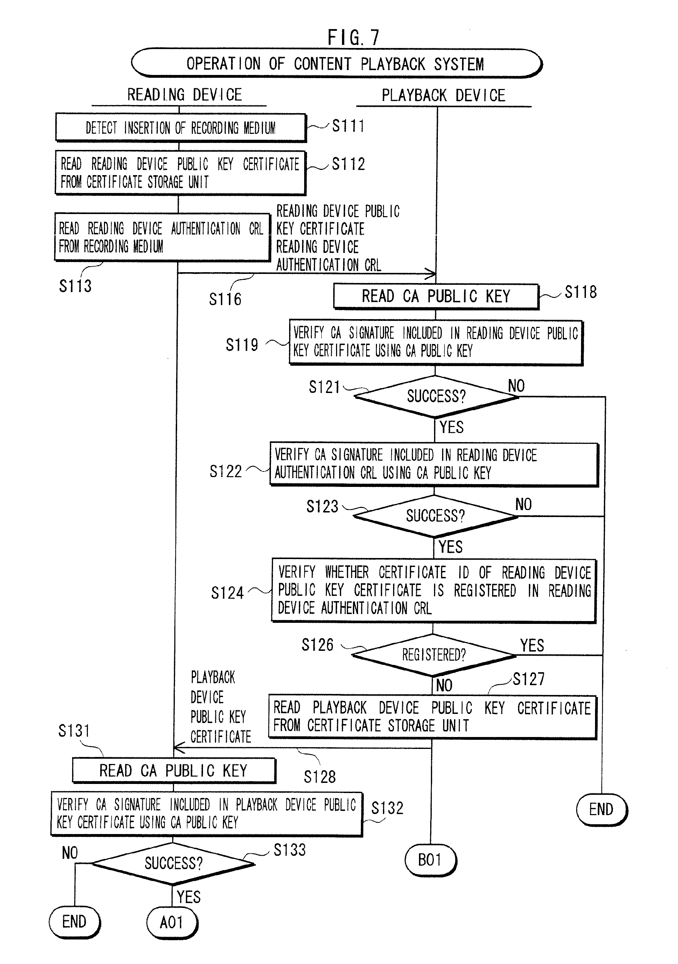

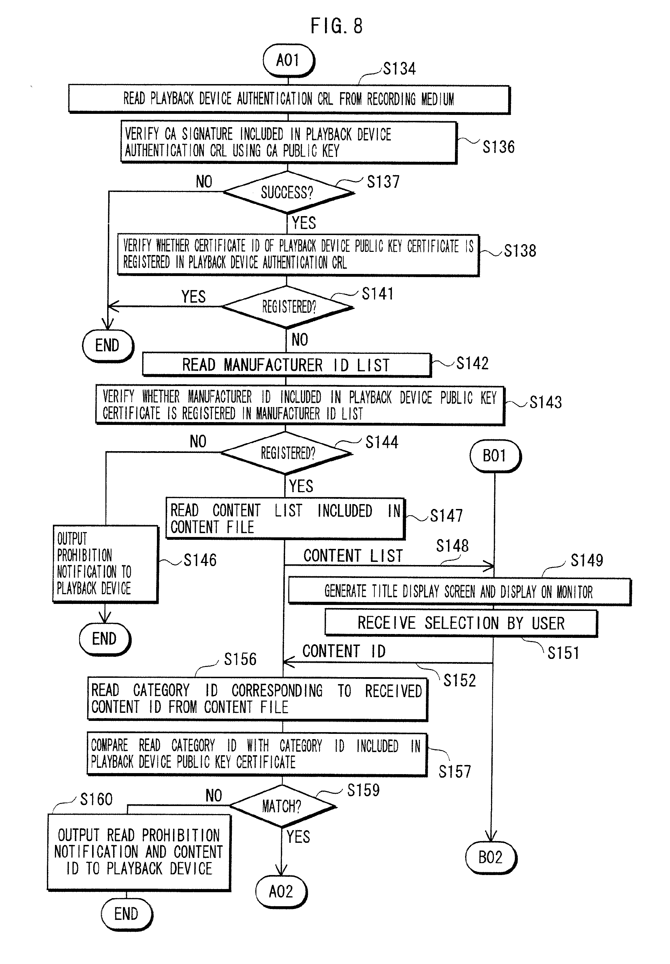

The following describes an operation of the content playback system.
(1) Operation of the Content Playback System
   FIGS. 7 to 9 are flowcharts showing an operation of the content playback system from the insertion of the recording medium 500 into the reading device 300 to the content playback. Data flows between the recording medium 500, the reading device 300, and the playback device 100 are shown in FIG. 2.

The operationof the content playback system is described below, with reference to FIGS. 2 and 7 to 9.
The recording medium 500 is inserted into the reading device 300, and the control unit 302 in the reading device 300 detects the insertion of the recording medium 500 via the drive unit 320 (step S111) . Upon detecting the insertion of the recording medium 500, the control unit 302 reads the reading device public key certificate 321 from the certificate storage unit 303 (step S112), reads the reading device authentication CRL 530 from the recording medium 500 via the drive unit 320 (step S113), and outputs the reading device public key certificate 321 and the reading device authentication CRL 530 to the playback device 100 via the transmission/reception unit 301 (step S116).

The control unit 102 in the playback device 100 detects the acquisition of the reading device public key certificate via the transmission/reception unit 101, and instructs the certificate verification unit 106 to verify the reading device public key certificate. The certificate verification unit 106 receives the reading device public key certificate and the reading device authentication CRL from the reading device 300 via the transmission/reception unit 101, and is instructed by the control unit 102 to verify the reading device public key certificate. Upon receiving the verification instruction, the signature verification unit 108 in the certificate verification unit 106 reads the CA public key "PK_CA" from the CA public key storage unit 107 (step S118), and verifies the CA signature "Sig(SK_CA, CeIDr||PK_R)" included in the received reading device public key certificate using the read CA public key "PK_CA" (step S119). If the verification results in a failure (step S121: NO), the signature verification unit 108 outputs a control signal indicating a failure of the verification of the reading device public key certificate to the control unit 102, to terminate subsequent processing.

If the verification results in a success (step S121: YES), the signature verification unit 108 outputs the reading device public key certificate and the CA public key "PK_CA" to the validity judgment unit 109.
The validity judgment unit 109 receives the reading device authentication CRL via the transmission/reception unit 101, and receives the reading device public key certificate and the CA public key "PK_CA" from the signature verification unit 108. The validity judgment unit 109 verifies the CA signature "Sig(PK_CA, VN' ||RID1' ||RID2')" included in the received reading device authentication CRL (step S122) . If the verification results in a failure (step S123: NO), the validity judgment unit 109 outputs a control signal indicating a failure of the verification of the reading device public key certificate to the control unit 102, to terminate subsequent processing. If the verification results in a success (step S123: YES), the validity judgment unit 109 extracts the certificate ID "CeIDr" from the reading device public key certificate, and checks whether the extracted certificate ID "CeIDr" is registered in the reading device authentication CRL (step S124) . If the extracted certificate ID "CeIDr" is registered in the reading device authentication CRL (step S126: YES), the validity judgment unit 109 outputs a control signal indicating a failure of the verification of the reading device public key certificate to the control unit 102, to terminate subsequent processing.

If the extracted certificate ID "CeIDr" is not registered in the reading device authentication CRL (step S126: NO), the validity judgment unit 109 outputs the reading device public key certificate to the shared key generation unit 112, and a control signal indicating a success of the verification of the reading device public key certificate to the control unit 102.
Upon receiving the control signal indicating the success of the verification of the reading device public key certificate, the control unit 102 reads the playback device public key certificate 121 from the certificate storage unit 103 (step S127), and outputs the read playback device public key certificate 121 to the reading device 300 via the transmission/reception unit 101 (step S128).

The certificate verification unit 306 in the reading device 300 receives the playback device public key certificate from the playback device 100 via the transmission/reception unit 301, and is instructed by the control unit 302 to verify the playback device public key certificate. The signature verification unit 308 in the certificate verification unit 306 reads the CA public key "PK_CA" from the CA public key storage unit 307 (step S131), and verifies the CA signature "Sig(SK_CA, CeIDp || MIDp || CaIDp || PK_P)" included in the received playback device public key certificate using the read CA public key "PK_CA" (step S132) . If the verification of the CA signature results in a failure (step S133: NO), the signature verification unit 308 outputs a control signal indicating a signature verification failure to the control unit 302, which responsively prohibits subsequent information transmission/reception with the playback device 100.

If the verification results in a success (step S133: YES), the signature verification unit 308 outputs the read CA public key and the playback device public key certificate to the validity judgment unit 309. The validity judgment unit 309 receives the CA public key "PK_CA" and the playback device public key certificate, reads the playback device authentication CRL from the recording medium 500 via the drive unit 320 (step S134), and verifies the CA signature "Sig (SK_CA, VN||RID1||RID2)" included in the read playback device authentication CRL 510 using the received CApublic key "PK_CA" (step S136) . If the verification of the CA signature results in a failure (step S137: NO), the validity judgment unit 309 outputs a control signal indicating a signature verification failure to the control unit 302, which responsively prohibits subsequent information transmission/reception with the playback device 100.

If the verification of the CA signature results in a success (step S137: YES), the validity judgment unit 309 extracts the certificate ID "CeIDp" from the playback device public key certificate, and checks whether the extracted certificate ID "CeIDp" is registered in the playback device authentication CRL 510 (step S138). If the extracted certificate ID is registered in the playback device authentication CRL (step S141: YES), the validity judgment unit 309 outputs a control signal indicating a signature verification failure to the control unit 302, which responsively prohibits subsequent information transmission/reception with the playback device 100.

If the extracted certificate ID "CeIDp" is not registered in the playback device authentication CRL 510 (step S141: NO), the validity judgment unit 3 09 outputs the playback device public key certificate to the manufacturer ID judgment unit 310.
The manufacturer ID judgment unit 310 receives the playback device public key certificate, and reads the manufacturer ID list 520 from the recording medium 500 via the drive unit 320 (step S142). The manufacturer ID judgment unit 310 compares the manufacture ID "MIDp" included in the received playback device public key certificate with each manufacturer ID included in the manufacturer ID list 520, to check whether the manufacturer ID "MIDp" in the public key certificate is registered in the manufacturer ID list 520 (step S143). If the manufacturer ID "MIDp" in the playback device public key certificate is not registered in the manufacture ID list 520 (step S144: NO), the manufacturer ID judgment unit 310 outputs a use prohibition notification to the control unit 302.

Upon receipt of the use prohibition notification from the manufacturer ID judgment unit 310, the control unit 302 outputs a prohibition notification indicating that the playback device 100 is not permitted to use the recording medium 500, to the payback device 100 via the transmission/reception unit 301 (step S146). In this case, the playback device 100 displays the disc error screen on the monitor 30.
If the manufacturer ID "MIDp" in the playback device public key certificate is registered in the manufacturer ID list 520 (step S144: YES), the manufacturer ID judgment unit 310 outputs a use permission notification to the control unit 302.

Upon receiving the use permission notification, the control unit 302 reads the content list 570 included in the content file 560 stored on the recording medium 500 via the drive unit 320 (step S147), and outputs the read content list 570 to the playback device 100 via the transmission/reception unit 301 (step S148).
The playback processing unit 119 in the playback device 100 receives the content list from the reading device 300 via the transmission/reception unit 101, generates the title display screen 131 from the received content list and the stored title display screen data, and displays the generated title display screen 131 on the monitor 30 (step S149).

In a state where the title display screen 131 is displayed on the monitor 30, the input reception unit 118 receives a user selection by a button operation (step S151), and outputs a content ID corresponding to the selected selection button to the reading device 300 via the transmission/reception unit 101 (step S152).
The category judgment unit 311 in the reading device 300 receives the content ID from the playback device 100 via the transmission/reception unit 301, reads a category ID corresponding to the received content ID from the content file 560 stored on the recording medium 500 (step S156), and compares the read category ID with the category ID "CaIDp" included in the playback device public key certificate (step S157). If the two IDs do not match (step S159: NO), the category judgment unit 311 outputs a read prohibition notification indicating prohibition to read content, to the control unit 302.

Upon receipt of the read prohibition notification, the control unit 302 outputs the content ID and a read prohibition notification indicating that the playback device 100 is not permitted to read the designated content, to the playback device 100 via the transmission/receptionunit 301 (step S160) . In this case, the playback device 100 displays the content error screen on the monitor 30.
If the two IDs match (step S159: YES), the category judgment unit 311 outputs the received content ID and a read permission notification indicating that the playback device 100 is permitted to read the encrypted content, to the control unit 302. The category judgment unit 311 also outputs the playback device public key certificate to the shared key generation unit 312.

The control unit 302 instructs the shared key generation unit 312 to establish a SAC. The shared key generation unit 312 and the shared key generation unit 112 in the playback device 100 establish a SAC and generate a shared key (step S161) .
If the SAC establishment results in a failure (steps S162 and S163: NO), the playback device 100 and the reading device 300 terminate subsequent processing. If the SAC establishment results in a success (steps S162 and S163: YES), the playback device 100 and the reading device 300 proceeds to subsequent processing.

The control unit 302 reads the encrypted content corresponding to the received content ID from the recording medium 500 (step S164), and outputs the read encrypted content to the playback device 100 via the transmission/reception unit 301 (step S166).
Next, the control unit 302 outputs a key decryption instruction to decrypt the encrypted content key, to the key decryption unit 317. The key decryption unit 317 receives the key decryption instruction, reads the media key list 540 and the encrypted content key 550 from the recording medium 500 via the drive unit 320 (step S167), and reads the device key from the device key storage unit 316 (step S169). The key decryption unit 317 then extracts the encrypted media key corresponding to the read device key from the read media key list 540, and decrypts the extracted encrypted media key using the device key to generate the media key "Km" (step S171). The key decryption unit 317 further decrypts the read encrypted content key 550 using the generated media key "Km" , to generate the content key "Kc" (step S172). The key decryption unit 317 outputs the generated content key "Kc" to the encryption processing unit 313.

The encryption processing unit 313 receives the shared key "Key_s "' from the shared key generation unit 312, and the content key "Kc" from the key decryption unit 317. Upon receiving these keys, the encryption processing unit 313 encrypts the content key "Kc" using the shared key "Key_s'", to generate the encrypted content key "E (Key_s', Kc)" (step S174). The encryption processing unit 313 outputs the encrypted content key "E (Key_s', Kc) " to the playback device 100 via the transmission/reception unit 301 (step S176).

The content decryption unit 114 in the playback device 100 receives the encrypted content from the reading device 300 via the transmission/reception unit 101, and the decryption processing unit 113 receives the encrypted content key "E(Key_s', Kc)".
The decryption processing unit 113 decrypts the encrypted content key "E(Key_s', Kc)" using the shared key "Key_s" received from the shared key generation unit 112, to generate the content key "Kc" (step S178). The decryption processing unit 113 outputs the generated content key "Kc" to the content decryption unit 114.

The content decryption unit 114 receives the content key "Kc" from the decryption processing unit 113, and decrypts the encrypted content using the received content key "Kc" to generate content (step S179). The content decryption unit 114 outputs the generated content to the playback processing unit 119.
The playback processing unit 119 receives the content from the content decryption unit 114, and plays back the received content on the monitor 30 (step S181).

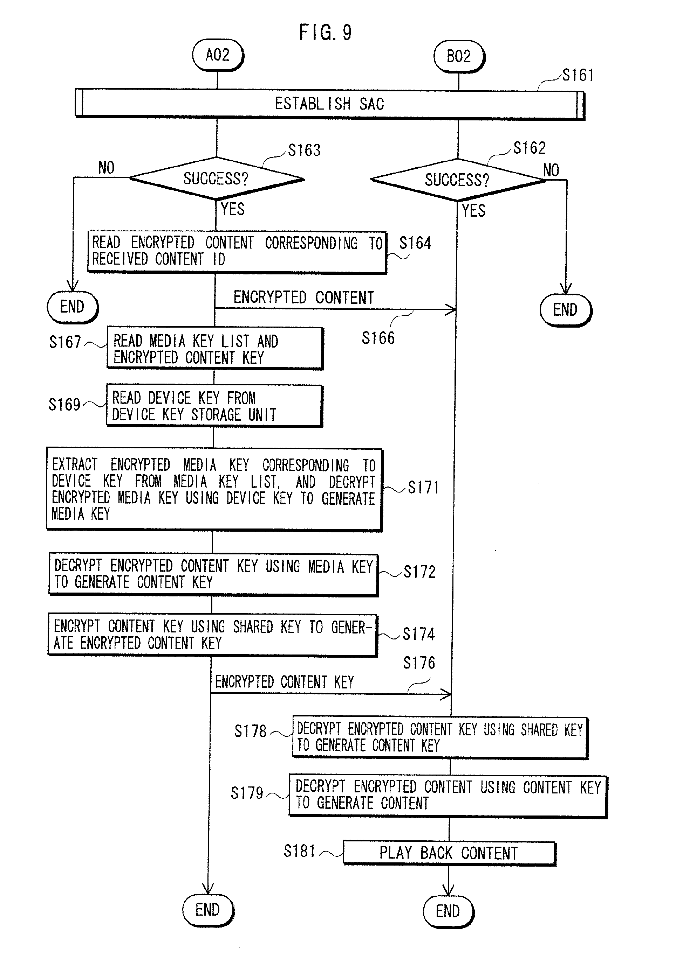

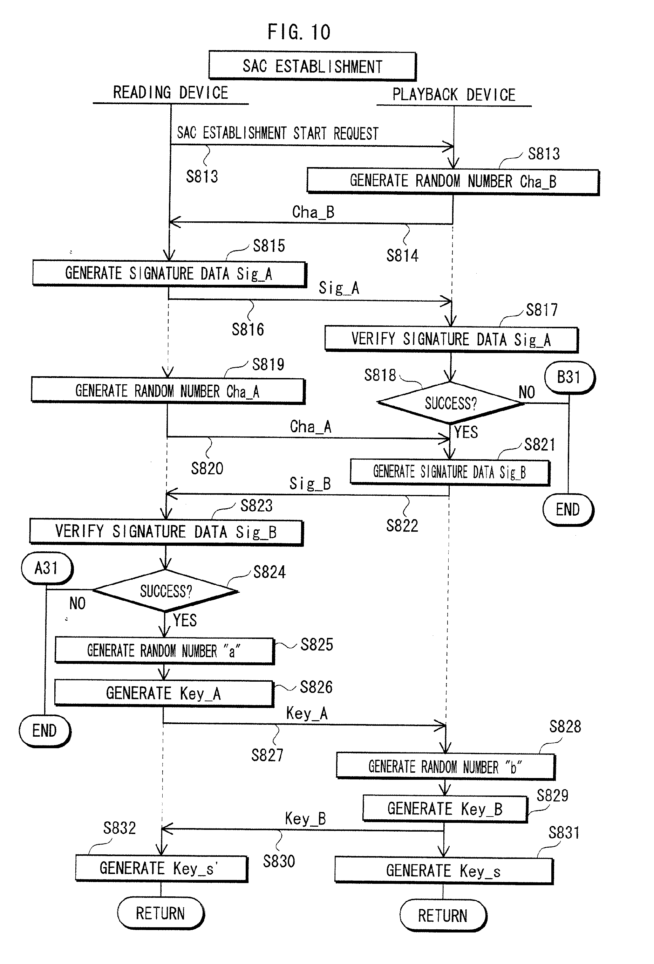

(2) SAC Establishment Operation
   FIG. 10 is a flowchart showing an operation of establishing a SAC by the shared key generation unit 112 in the playback device 100 and the shared key generation unit 312 in the reading device 300. The SAC establishment operation is described below with reference to FIG. 10. Though the SAC establishment operation is performed between the shared key generation unit 112 in the playback device 100 and the shared key generation unit 312 in the reading device 300, the following description assumes the operation to be performed between the reading device 300 and the playback device 100 for the sake of simplicity. This operation corresponds to step S161 in FIG. 9.

Note that the SAC establishment method described here is merely one example and so other authentication methods and key sharing methods may instead be used.
Let Gen() be a key generation function, and Y be a parameter unique to the system. Key generation function Gen () satisfies a relationship "Gen (x, Gen(z, Y)) = Gen (z, Gen (x, Y))". Since a key generation function can be implemented by any well-known technique, its explanation has been omitted here. Diffie-Hellman public key distribution is disclosed as one example of such techniques.

The reading device 300 transmits a SAC establishment start request to the playback device 100 (step S813).
The playback device 100 receives the SAC establishment start request from the reading device 300. Upon receiving the SAC establishment start request, the playback device 100 generates a random number "Cha_B" (step S813), and transmits the generated random number "Cha_B" to the reading device 300 (step S814).

The reading device 300 receives the randomnumber "Cha_B" , and applies signature generation algorithm S to the received randomnumber "Cha_B" using the secret key "SK_R" of the reading device 300, to generate signature data "Sig_A" (step S815). The reading device 300 transmits the generated signature data "Sig_A" to the playback device 100 (step S816).
Upon receipt of the signature data "Sig_A" , the playback device 100 applies signature verification algorithm V to the received signature data "Sig_A" using the public key "PK_R" of the reading device 300 received in the form of being contained in the reading device public key certificate, for signature verification (step S817). When judging that the signature verification results in a failure (step S818: NO), the operation is terminated. When judging that the signature verification results in a success (step S818: YES), the operation is continued.

The reading device 300 generates a random number "Cha_A" (step S819), and transmits the generated random number "Cha_A" to the playback device 100 (step S820).
The playback device 100 receives the random number "Cha_A", and applies signature generation algorithm S to the received random number "Cha_A" using the secret key "SK_P" of the playback device 100, to generate signature data "Sig_B" (step S821). The playback device 100 transmits the generated signature data "Sig_B" to the reading device 300 (step S822) .

Upon receipt of the signature data "Sig_B" , the reading device 300 applies signature verification algorithm V to the received signature data "Sig_B" using the public key "PK_P" of the playback device 100 received in the form of being contained in the playback device public key certificate, for signature verification (step S823). When judging that the signature verification results in a failure (step S824: NO), the operation is terminated. When judging that the signature verification results in a success (step S824: YES) , the reading device 300 generates a random number "a" (step S825), generates "Key_A = Gen(a, Y)" using the generated random number "a" (step S826), and transmits the generated "Key_A" to the playback device 100 (step S827).

Upon receipt of "Key_A", the playback device 100 generates a random number "b" (step S828), generates "Key_B = Gen (b, Y) " using the generated random number "b" (step S829), and transmits the generated "Key_B" to the reading device 300 (step S830).
Also, the playback device 100 generates "Key_s = Gen(b, Key_A) = Gen (b, Gen (a, Y)) "using the generated random number "b" and the received "Key_A", as a shared key (step S831). The reading device 300 receives "Key_B" , and generates "Key_s' = Gen (a, Key_B) = Gen (a, Gen (b, Y))" from the generated random number "a" and the received "Key_B", as a shared key (step S832).

### 1.6. Conclusion and Effects

As described above, in the content playback system of the present invention, a manufacturer ID list showing a manufacturer ID of a manufacturer/seller of the recording medium 500 and a category ID showing the type of each set of content are stored on the recording medium 500.

Meanwhile, a manufacturer ID of a manufacturer/seller of content which the playback device 100 is permitted to use and a category ID showing a type of the content are included in the playback device public key certificate stored in the playback device 100.
After verifying the authenticity of the playback device 100 using the playback device public key certificate, the reading device 300 judges whether the manufacturer ID included in the playback device public key certificate is registered in the manufacturer ID list. If the manufacturer ID is registered in the manufacturer ID list, the reading device 300 transmits the content list.

The playback device 100 displays the title display screen 131, receives a selection from the user, and transmits a selected content ID to the reading device 300.
The reading device 300 receives the content ID from the playback device 100, and compares a category ID corresponding to the content ID with the category ID included in the playback device public key certificate. Only when the two category IDs match, the reading device 300 outputs a content key and encrypted content to the playback device 100.

Thus, the reading device 300 outputs, to the playback device 100, only content that was manufactured/sold by the manufacturer/seller identified by the manufacturer ID included in the playback device public key certificate and that belongs to a category identified by the category ID included in the playback device public key certificate, and does not output other content. This makes it possible to limit content acquirable by the playback device from the recording medium on which a plurality of sets of content are recorded.

### 1.7. Modifications

The first embodiment has been described as one example of the present invention, though the present invention is not limited to the above. Example modifications are given below.
(1) The first embodiment describes the case where the playback device public key certificate includes a manufacturer ID and a category ID, and the reading device 300 checks both the manufacturer ID and the category ID. However, the reading device 300 may check only one of the manufacturer ID and the category ID.

For example, the playback device public key certificate includes a category ID. Once the verification by the certificate verification unit 306 has resulted in a success, the control unit 302 outputs the content list to the playback device 100, and receives a content ID from the playback device 100. The control unit 302 reads a category ID corresponding to the received content ID from the recording medium 500, and outputs encrypted content and the like to the playback device 100 if the read category ID matches the category ID included in the playback device public key certificate.

In this case, the manufacturer ID list can be omitted from the recording medium 500, and the manufacturer ID judgment unit 310 can be omitted from the reading device 300. Also, a time from the insertion of the recording medium 500 to the start of the content playback can be reduced.
(2) The first embodiment describes the case where the reading device 300 judges whether to output encrypted content to the playback device 100, by conducting the check on the manufacturer ID included in the playback device public key certificate, the acquisition of the content ID from the playback device 100, and the comparison of the category ID corresponding to the acquired content ID and the category ID included in the playback device public key certificate in this order. However, the present invention is not limited to this order, so long as the content to be eventually output to the playback device 100 corresponds to the manufacturer ID and the category ID included in the playback device public key certificate.

As one example, upon receiving the playback device public key certificate from the manufacturer ID judgment unit 310, the category judgment unit 311 reads the content ID 563 and the category ID 562, and the content ID 567 and the category ID 566, from the content file 560 stored on the recording medium 500 via the drive unit 320. The category judgment unit 311 then extracts the category ID from the received playback device public key certificate, compares the extracted category ID with the read category ID 562, and also compares the extracted category ID with the read category ID 566. The category judgment unit 311 outputs a content ID corresponding to one of the category IDs 562 and 566 that matches the extracted category ID, to the control unit 302.

The control unit 302 receives the content ID from the category judgment unit 311, and reads the content list 570 via the drive unit 320. The control unit 302 extracts only content information including the received content ID from the read content list 570, and generates an output content list. The control unit 302 outputs the generated output content list to the playback device 100, instead of the content list 570.

Upon receiving a content ID from the playback device 100, the transmission/reception unit 301 outputs the received content ID to the control unit 302.
Upon receiving the content ID, the control unit 302 instructs the shared key generation unit 312 to establish a SAC. Subsequent processing is the same as that in the first embodiment.
According to this modification, regarding content which the playback device 100 is not permitted to use, the playback device 100 is not even notified that the content is recorded on the recording medium 500. Hence the playback device 100 cannot even attempt to read such content.

Also, since only a title of content which the playback device 100 is permitted to use is displayed on the title display screen, the user can reliably select content that can be played back. This improves operability.
(3) The above embodiment and modifications describe the case where the playback device public key certificate includes one manufacturer ID and one category ID, but the playback device public key certificate may include a plurality of manufacturer IDs and a plurality of category IDs.

For instance, the playback device public key certificate includes manufacturer IDs "MIDp1" and "MIDp2", and category IDs "0001" and "0003". This indicates that the playback device 100 is permitted to use music (category ID: 0001) and AV content (category ID: 0003) among content manufactured/sold by any of the manufacturer/sellers corresponding to the manufacturer IDs "MIDp1" and "MIDp2".

The manufacturer ID judgment unit 310 in the reading device 300 extracts the manufacturer IDs "MIDp1" and "MIDp2" from the playback device public key certificate. If at least one of "MIDp1" and "MIDp2" is registered in the manufacturer ID list 520 read from the recording medium 500, the manufacturer ID judgment unit 310 outputs the playback device public key certificate to the category judgment unit 311, and outputs a use permission notification to the control unit 302.

The category judgment unit 311 reads a category ID corresponding to a content ID received from the playback device 100, from the content file 560. If the read category IDmatches any one of "0001" and "0003" included in the playback device public key certificate, the category judgment unit 311 outputs the received content ID and a read permission notification to the control unit 302.
(4) Also, the playback device public key certificate may include a plurality of pairs of manufacturer ID and category ID. In detail, the playback device public key certificate includes first permission information made up of the manufacturer ID "MIDp1" and the category ID "0001" , and second permission information made up of the manufacturer ID "MIDp2" and the category ID "0002". This indicates that the playback device 100 is permitted to use music (category ID: 0001) among content manufactured/sold by the manufacturer/seller shown by the manufacturer ID "MIDp1" , and AV content (category ID: 0003) among content manufactured/sold by the manufacturer/seller shown by the manufacturer ID "MIDp2".

The recording medium 500 stores a playback permission list made up of a plurality of pieces of playback permission information, instead of the manufacturer ID list. Each piece of playback permission information corresponds to encrypted content, and is composed of a content ID, a category ID, and a manufacturer ID. For example, playback permission information corresponding to the encrypted content 561 "E (Kc, ConA)" is composed of the content ID "ID_A" uniquely identifying the content "ConA" , the category ID "0001" showing the type of the content "ConA" , and the manufacturer ID showing the manufacturer/seller of the content "ConA".

In such a case, if the verification by the certificate verification unit 306 results in a success, the reading device 300 reads the content list 570 from the recording medium 500, and outputs the content list 570 to the playback device 100. Upon receiving a content ID from the playback device 100, the reading device 300 reads playback permission information including the received content ID, and compares a pair of manufacturer ID and category ID included in the read playback permission information with the first permission information in the playback device public key certificate. The reading device 300 then compares the pair of manufacturer ID and category ID included in the read playback permission information with the second permission information. If any one of the first permission information and the second permission information matches the pair of manufacturer ID and category ID included in the read playback permission information, the reading device 300 outputs encrypted content corresponding to the received content ID to the playback device 100.
(5) The first embodiment describes the case where a manufacturer ID and a category ID are used to judge whether to permit reading of content, but the judgment may instead be made using an application ID showing an application installed in the playback device 100, a method identifier uniquely identifying a copyright protection method, and the like.

An example of using an application ID instead of a category ID is explained below. The recording medium 500 stores an application ID showing an application which includes a procedure of decrypting encrypted content and playing back generated content, instead of a category ID. Also, the playback device public key certificate includes an application ID showing an application held in the playback processing unit 119, instead of a category ID.

The category judgment unit 311 compares the application IDs, instead of the category IDs.
(6) Also, the judgment on whether to permit reading of content may be made based on CCI (Copy Control Information) .
   For example, the playback device public key certificate includes copy control information "CCIp". This copy control information "CCIp" is any one of "00" indicating copy free, "01" indicating copy once, "10" indicating no more copy, and "11" indicating copy never.

The recording medium 500 stores copy control information in correspondence with each set of encrypted content. The copy control information stored on the recording medium 500 shows copyability of content generated by decrypting the corresponding encrypted content and a number of copies permitted.
When the copy control information "CCIp" included in the playback device public key certificate matches copy control information corresponding to a content ID received from the playback device 100, the reading device 300 outputs encrypted content corresponding to the received content ID to the playback device 100.
(7) Also, the judgment may be made according to a security level of encrypted content recorded on the recording medium 500. The security level referred to here is a numerical representation of the safety of the encrypted content, such as a key length of a content key used for encryption or a strength of an encryption method.

As one example, the recording medium 500 stores a security level of each set of encrypted content, e.g. , a key length of a content key used for the encrypted content. The playback device public key certificate in the playback device 100 includes a security level threshold value.
The reading device 300 compares the security level stored on the recording medium 500 with the threshold value included in the playback device public key certificate, instead of comparing category IDs. If the security level is no lower than the threshold value, a read permission notification is output to the control unit 302.

The first embodiment describes the case where the two sets of encrypted content recorded on the recording medium 500 are generated using the same content key, but they may be generated using separate content keys. In this case, the recording medium 500 stores a key length of a content key used for each set of encrypted content in correspondence with the encrypted content.
(8) Also, the judgment on whether to permit reading of content may be made according to a processing capacity of the playback device 100.

As one example, the recording medium 500 stores a required processing capacity in correspondence with each set of encrypted content, instead of a category ID. The required processing capacity is a processing capacity required for the playback device 100 to decrypt the corresponding encrypted content and play back the decrypted content.
The playback device public key certificate includes a processing capacity of the playback processing unit 119, instead of a category ID.

The reading device 300 compares a required processing capacity corresponding to a content ID received from the playback device 100 with the processing capacity included in the playback device public key certificate, instead of comparing category IDs. If the processing capacity included in the playback device public key certificate is no lower than the required threshold value, the reading device 300 outputs an encrypted content key and encrypted content corresponding to the received content ID to the playback device 100.
(9) The first embodiment and the modifications describe the case where information (hereafter referred to as permission classifying information), such as a manufacturer ID and a category ID, that indicates content which the playback device 100 is permitted to use is included in the playback device public key certificate, but the information may not be included in the playback device public key certificate.

For example, the playback device 100 safely holds the permission classifying information, by storing the permission classifying information in a tamper-resistant secure memory that cannot be read directly by an external device, by adding a signature by an authorized third party or content manufacturer/seller to the permission classifying information, or by storing the permission classifying information in the form of being encrypted using a secret key possessed only by the reading device.
(10) The first embodiment describes the case where the reading device 300 and the playback device 100 are separate devices, but the reading device 300 may be included in the playback device 100.

The first embodiment describes the content playback system that is constituted by the reading device, the playback device, and the monitor, but a device for processing/editing read content or a recording device for writing read content to another recording medium may be provided instead of the playback device.
(11) Also, the content playback system may include a versatile device such as a personal computer (hereafter "PC"), instead of the playback device 100 . In this case, the PC has a plurality of applications, and operates in accordance with one of the plurality of applications that is selected by a user operation.

Suppose the playback processing unit 119 stores a game execution application, a music playback application, and a video playback application.
The certificate storage unit 103 stores three application public key certificates having the same structure as the playback device public key certificate described in the first embodiment. The three application public key certificates correspond to the three applications held by the playbackprocessing unit 119. An application certificate corresponding to the game execution application includes the category ID "0004" indicating games. An application certificate corresponding to the music playback application includes the category ID "0001" indicating music. An application certificate corresponding to the video playback application includes the category ID "0003" indicating AV content.

When the playback device 100 is powered on, the control unit 102 generates a menu screen including names of the three applications, outputs the generatedmenu screen to the monitor 30, and receives a selection of an application from the user via the input receptionunit 118 . Upon receiving the selection from the user, the control unit 102 instructs the playback processing unit 119 to start the selected application. A subsequent operation of the playback device is the same as the operation in the first embodiment, except that the control unit 102 outputs an application public key certificate corresponding to the user selected application to the reading device 300 instead of the playback device public key certificate.

In this way, readable content can be limited for each application. This prevents an application from reading content other than content shown by a category ID included in a corresponding application certificate.
(12) The first embodiment and the modifications describe the case where the encrypted content recorded on the recording medium 500 is a result of encrypting content constituted by video, audio, games, and the like, but the information recorded on the recording medium 500 is not limited to this. For example, text data, spreadsheet data, and computer programs may be included in such information.
(13) The present invention has been described as a content playback system constituted by a reading device, a playback device, and a monitor, but the present invention may also be a write control system constituted by a PC and a writing device for writing information onto a recording medium.

For instance, the recording medium inserted in the writing device is a writable optical disc. A category ID list including one or more category IDs is stored on this recording medium.
The PC holds a PC public key certificate having a similar structure to the playback device public key certificate in the first embodiment. It is assumed here that the PC public key certificate does not include any manufacturer ID but includes the category ID "0002".

The writing device reads the category ID list from the recording medium, and writes data received from the PC onto the recording medium only when the category ID "0002" in the PC public key certificate is included in the read category ID list.
(14) The first embodiment describes the case where the reading device 300 can be loaded with the recording medium 500 to read various information from the recording medium 500, but the reading device 300 may be a communication device that acquires various information from an external device connected to an internet.
(15) Each of the aforedescribed devices can actually be realized by a computer system that includes a microprocessor, a ROM, a RAM, a hard disk unit, a display unit, a keyboard, a mouse, and the like. A computer program is stored on the RAM or the hard disk unit. The functions of each device can be achieved by the microprocessor operating in accordance with this computer program. Here, to attain predetermined functions, the computer program is structured by combining a plurality of instruction codes showing commands to a computer.
(16) The elements constituting each of the aforedescribed devices may be partially or entirely implemented by a single system LSI (Large Scale Integration). The system LSI is an ultra-multifunctional LSI manufactured by integrating multiple components on a single chip, and can actually be realized by a computer system that includes a microprocessor, a ROM, a RAM, and the like. A computer program is stored on the RAM. Functions of the system LSI can be achieved by the microprocessor operating in accordance with this computer program.
(17) The elements constituting each of the aforedescribed devices may be partially or entirely implemented by a removable IC card or a discrete module. The IC card or the module referred to here is a computer system that includes a microprocessor, a ROM, a RAM, and the like. The IC card or the module may contain the above ultra-multifunctional LSI. Functions of the IC card or the module can be achieved by the microprocessor operating in accordance with the computer program. Here, the IC card or the module may be tamper-resistant.
(18) The present invention also applies to the method described above. This method may be realized by a computer program that is executed by a computer. Such a computer program may be distributed as a digital signal.

The present invention may be realized by a computer-readable recording medium, such as a flexible disk, a hard disk, a CD-ROM, an MO, a DVD, a DVD-ROM, a DVD-RAM, a BD (Blu-ray Disc), or a semiconductor memory, on which the above computer program or digital signal is recorded. Conversely, the present invention may also be realized by the computer program or digital signal that is recorded on such a recording medium.

The computer program or digital signal that achieves the present invention may also be transmitted via a network, such as an electronic communications network, a wired or wireless communications network, or an internet, or via data broadcasting.
The present invention can also be realized by a computer system that includes a microprocessor and a memory. In this case, the computer program can be stored in the memory, with the microprocessor operating in accordance with this computer program.

The computer program or the digital signal may be provided to an independent computer system by distributing a recording medium on which the computer program or the digital signal is recorded, or by transmitting the computer program or the digital signal via a network. The independent computer system may then execute the computer program or the digital signal to function as the present invention.
(19) The above embodiment and modifications maybe freely combined.

### Industrial Applicability

The present invention can be used recurrently and continuously in an industry for producing and selling digital content, an industry for manufacturing and selling various electrical devices that use the digital content, and an industry for providing various services using the digital content.

## Claims

1. An information acquisition device for acquiring information from a resource in accordance with an instruction from an information use device, the information acquisition device comprising:
an acquisition unit operable to acquire, from the information use device, permitted group information indicating a group of information which the information use device is permitted to use;
a judgment unit operable to acquire, from the resource, use target group information indicating a group of information to which use target information held by the resource belongs, and judge whether the use target information belongs to the group indicated by the permitted group information by comparing the permitted group information and the use target group information; and
a control unit operable to acquire the use target information from the resource and output the acquired use target information to the information use device if the judgment unit judges affirmatively, and suppress the output if the judgment unit judges negatively.

2. The information acquisition device of Claim 1,
wherein the acquisition unit acquires, as the permitted group information, first producer identification information showing a producer of the information which the information use device is permitted to use, and
the judgment unit acquires, as the use target group information, second producer identification information showing a producer of the use target information, compares the first producer identification information and the second producer identification information, and judges affirmatively if the first producer identification information matches the second producer identification information.

3. The information acquisition device of Claim 1,
wherein the acquisition unit acquires, as the permitted group information, first application identification information showing an application provided in the information use device, and
the judgment unit acquires, as the use target group information, second application identification information showing an application having a function for correctly processing the use target information, compares the first application identification information and the second application identification information, and judges affirmatively if the first application identification information matches the second application identification information.

4. The information acquisition device of Claim 1,
wherein the acquisition unit acquires, as the permitted group information, first method identification information showing a copyright protection method adopted by the information use device, and
the judgment unit acquires, as the use target group information, second method identification information showing a copyright protection method required in using the use target information, compares the first method identification information and the second method identification information, and judges affirmatively if the first method identification information matches the second method identification information.

5. The information acquisition device of Claim 1,
wherein the use target information held by the resource is generated by applying security processing to a digital work,
the acquisition unit acquires, as the permitted group information, a first security level showing safety of security processing, and
the judgment unit acquires, as the use target group information, a second security level showing safety of the security processing applied to the digital work, compares the first security level and the second security level, and judges affirmatively if the second security level shows higher safety than the first security level.

6. The information acquisition device of Claim 1,
wherein a replication method for the use target information has been designated in advance,
the acquisition unit acquires, as the permitted group information, first copy control information showing a replication method, and
the judgment unit acquires, as the use target group information, second copy control information showing the replication method designated for the use target information, compares the first copy control information and the second copy control information, and judges affirmatively if the first copy control information matches the second copy control information.

7. The information acquisition device of Claim 1,
wherein the acquisition unit acquires, as the permitted group information, first capacity information showing a processing capacity of the information use device, and
the judgment unit acquires, as the use target group information, second capacity information showing a processing capacity necessary for processing the use target information, compares the first capacity information and the second capacity information, and judges affirmatively if the processing capacity shown by the first capacity information is no lower than the processing capacity shown by the second capacity information.

8. The information acquisition device of Claim 1,
wherein the information use device holds a certificate that contains the permitted group information and signature information generated by signing at least the permitted group information,
the acquisition unit acquires the permitted group information in a state of being contained in the certificate,
the information acquisition device further comprises:
a signature verification unit operable to verify the signature information contained in the certificate, and
the judgment unit performs the judgment only if the verification is successful.

9. The information acquisition device of Claim 8,
wherein the certificate is issued by a trusted third party organization, with the signature information being generated by signing at least the permitted group information using a secret key held by the third party organization, and
the signature verification unit verifies the signature information using a public key of the third party organization.

10. The information acquisition device of Claim 1,
wherein the resource is a recording medium, and
the judgment unit acquires the use target group information by reading the use target group information from the recording medium.

11. The information acquisition device of Claim 1,
wherein the judgment unit acquires the use target group information from the resource via a network.

12. An information acquisition method used in an information acquisition device for acquiring information from a resource in accordance with an instruction from an information use device, the information acquisition method comprising:
an acquisition step of acquiring, from the information use device, permitted group information indicating a group of information which the information use device is permitted to use;
a judgment step of acquiring, from the resource, use target group information indicating a group of information to which use target information held by the resource belongs, and judging whether the use target information belongs to the group indicated by the permitted group information by comparing the permitted group information and the use target group information; and
a control step of acquiring the use target information from the resource and outputting the acquired use target information to the information use device if the judgment step judges affirmatively, and suppressing the output if the judgment step judges negatively.

13. An integrated circuit provided in an information acquisition device for acquiring information from a resource in accordance with an instruction from an information use device, the integrated circuit comprising:
an acquisition unit operable to acquire, from the information use device, permitted group information indicating a group of information which the information use device is permitted to use;
a judgment unit operable to acquire, from the resource, use target group information indicating a group of information to which use target information held by the resource belongs, and judge whether the use target information belongs to the group indicated by the permitted group information by comparing the permitted group information and the use target group information; and
a control unit operable to acquire the use target information from the resource and output the acquired use target information to the information use device if the judgment unit judges affirmatively, and suppress the output if the judgment unit judges negatively.

14. An information acquisition program used in an information acquisition device for acquiring information from a resource in accordance with an instruction from an information use device, the information acquisition program comprising:
an acquisition step of acquiring, from the information use device, permitted group information indicating a group of information which the information use device is permitted to use;
a judgment step of acquiring, from the resource, use target group information indicating a group of information to which use target information held by the resource belongs, and judging whether the use target information belongs to the group indicated by the permitted group information by comparing the permitted group information and the use target group information; and
a control step of acquiring the use target information from the resource and outputting the acquired use target information to the information use device if the judgment step judges affirmatively, and suppressing the output if the judgment step judges negatively.

15. The information acquisition program of Claim 14, being stored on a computer readable recording medium.

16. An application program used in an information use device that uses information acquired from a resource via an information acquisition device, the information use device including a storage unit operable to store permitted group information indicating a group of information which the application program is permitted to use, the application program comprising:
an output step of reading the permitted group information corresponding to the application program from the storage unit, and outputting the read permitted group information to the information acquisition device;
an acquisition step of acquiring, if the information acquisition device judges that use target information held by the resource belongs to the group indicated by the permitted group information, the use target information via the information acquisition device; and
a use step of using the acquired use target information.

17. A computer readable recording medium comprising:
use target information; and
use target group information indicating a group of information to which the use target information belongs.
